# EUROPEAN PATENT APPLICATION

(11) **EP 0 724 918 A1**
(43) Date of publication of application: **07.08.1996**
(21) Application number: 95928006.6
(22) Date of filing: 10.08.1995
(51) Int. Cl.: B09B 3/00

(54) **HEAVY METAL-CONTAINING WASTE TREATING PROCESS AND APPARATUS**

(30) Priority: 15.08.1994 JP 191430/94
(71) Applicant: SHINMAYWA INDUSTRIES, LTD., Nishinomiya-shi, Hyogo 663 (JP)
(72) Inventor: HAYASHI, Yoshihiro;, Nishinomiya-shi, Hyogo 663 (JP); YAMANE, Takeshi;, Nishinomiya-shi, Hyogo 663 (JP); KANNAN, Masaki;, Nishinomiya-shi, Hyogo 663 (JP); KOJIMA, Akira, Kiryu-shi Gunma 376 (JP)
(74) Representative: West, Alan Harry
(86) International application number: JP9501593
(87) International publication number: WO9605002

(57) **Abstract**

A method of and an apparatus for disposing waste containing heavy metals for conversion to a harmless state are provided. In the method, iron oxide or a material forming iron oxide by heating in the presence of oxygen and a reductant such as carbon are added to the waste. The obtained mixture is heated in a dry method, to form ferrite. The heavy metals are fixed in the ferrite, and the waste is converted to a safe and useful ferrite material. The disposing apparatus comprises a reactor (18), a raw material supply unit (10, 12, 14, 16), a stirring unit (22), a radiation heater (20), a volatile metal recovery unit (26), and a dust collector (28).

## Description

### Technical Field

The present invention relates to a method of and an apparatus for disposing waste containing heavy metals, and more particularly, it relates to a method of and an apparatus for stabilizing heavy metals which are contained in various waste by a dry method and preparing a harmless and useful ferrite material.

### Background Technique

Burned ash (bottom ash and fly ash) which is generated in a waste incineration plant or a refuse incinerating station may contain various heavy metals such as Cd, Pb, Cr, Mn, Zn and Cu, for example. In order to control the elution quantities thereof with respect to water below the environmental standard, it is necessary to stabilize the heavy metals in the burned ash.

While various methods have been developed for such a stabilization treatment, there has recently been newly developed a simple method of mixing an iron raw material (iron oxide powder, iron powder or the like) with fly ash and heating the mixture at about 800°C to 1100°C (Kojima and Yanagisawa, Kinzoku, March 1994, p. 11 to 17). This method is a dry ferritization method of mixing iron oxide with fly ash and heating the mixture to about 800°C to 1100°C for causing intersolid reaction, thereby forming ferrite. This dry ferritization method has such advantages that the handling operation is simple, it is also possible to utilize waste combustion energy of a waste incineration plant, and recycling can be made as ferrite (magnetic material) with employment of a low-priced raw material, as compared with wet methods of dispersing fly ash in liquids of prescribed pH values and stabilizing the same (Japanese Patent Publication No. 2-21311 and Japanese Patent Publication No. 6-2275), a method of solidifying fly ash in concrete (Japanese Patent Publication No. 53-27700) and a method of mixing a sintering assistant, clay or the like into a slurry of fly ash and sintering/solidifying the same (Japanese Patent Publication No. 56-50633).

In this conventional method, on the other hand, a temperature of at least about 800°C is necessary for producing ferrite, and relatively high energy is required for the treatment. It is desired the ferritization is carried out at lower energy, if possible.

Also as to waste from other materials containing heavy metals such as plating sludge, used tire waste, soil and waste from dry cells (dry battery), further, desired is conversion to safe materials not contaminating the environment by a stabilization treatment.

### Disclosure of the Invention

An object of the present invention is to improve the aforementioned conventional dry ferritization method in relation to waste disposal, for providing a method having the following characteristics, for example:
(a) Waste can be converted to a harmless state by a heat treatment of a lower temperature and a shorter time.
(b) Ferritization can be made with a smaller amount of addition of iron oxide.
(c) Ferrite having higher magnetic strength can be formed.

Another object of the present invention is to provide an apparatus for effectively carrying out such a method.

The method of disposing waste containing heavy metals according to the present invention comprises a step of heating a mixture of the waste and an iron based material, which is selected from the group consisting of iron oxide and materials forming iron oxide by heating in the presence of oxygen, in a dry method in the presence of a reductant, to produce ferrite.

The most important feature of the present invention resides in that the reductant is employed for forming ferrite in the dry method. Carbon, carbon monoxide, hydrogen or the like can be employed as the reductant, for example. Carbon is a more preferable reductant in the present invention.

The term "dry method" is in opposition to "wet method". In the dry method, a solid material which is exposed to an atmosphere is treated in a substantially dry state. In the wet method, on the other hand, a material to be treated is present in a liquid.

The apparatus for disposing waste containing heavy metals according to the present invention comprises a reaction furnace having an inner wall consisting of a refractory material, means for supplying waste, an iron based material and a reductant of prescribed quantities into the reaction furnace, means for mixing and stirring the materials which are supplied into the reaction furnace, and means for heating the materials which are supplied into the reactor furnace, wherein the apparatus produces ferrite by stirring and heating the materials which are supplied into the reaction furnace.

### Brief Description of the Drawings

Fig. 1 is a model diagram showing the system of a concrete example of the apparatus according to the present invention.
Fig. 2 is a model diagram showing a section and attachments of a concrete example of a reactor which is employed for the apparatus of Fig. 1.
Fig. 3 is a sectional view typically showing a concrete example of a raw material supply unit which is employed for the apparatus of Fig. 1.
Fig. 4 is a plan view typically showing a state of observing the unit of Fig. 3 from above.
Fig. 5 is a model diagram showing a section of the reactor of Fig. 2 as viewed from a side and a ferrite material recovery unit.
Fig. 6 is a model diagram for illustrating concrete examples of a volatile metal recovery unit and a dust collector which are employed for the apparatus of Fig. 1.
Fig. 7 is a perspective view showing a concrete example of a radiation heater which is employed for the apparatus of Fig. 1.
Fig. 8 is a perspective view showing another concrete example of the radiation heater which is employed for the apparatus of Fig. 1.
Fig. 9 is a model diagram showing a concrete example of the apparatus according to the present invention employing a rotary furnace.
Fig. 10 is a model diagram showing a concrete example of the apparatus according to the present invention employing a conveyor.
Fig. 11 is a diagram typically showing a section of the apparatus shown in Fig. 10.
Fig. 12 is a diagram showing the results of a magnetism test as to samples which were obtained by heat treating mixtures of burned ash and iron oxide or mixtures of burned ash, iron oxide and charcoal at various temperatures.
Fig. 13 is a diagram showing the results of a magnetism test which was carried out on samples obtained by varying amounts of addition of charcoal.
Fig. 14 is a diagram showing the results of a magnetism test which was carried out on samples obtained by varying amounts of addition of iron oxide.

### Best Mode for Carrying Out the Present Invention

The method according to the present invention can be applied to disposal of various waste materials containing heavy metals such as burned ash, plating sludge, used tire waste, dry cell waste and the like, and soil containing the heavy metals.

According to the present invention, the heavy metals which are contained in the waste and iron oxide are finally reacted to form ferrite. The ferrite can be generally expressed as MFe₂O₄ or MO·Fe₂O₃ (M: metal atoms), and has a spinel structure. In the ferrite, heavy metal atoms are incorporated in the crystal lattice, to be only slightly soluble in water, and stabilized. Further, the ferrite has magnetism since the same is an iron oxide based ferrimagnetic substance. Therefore, the mixture for forming ferrite by heating contains iron oxide or a material forming iron oxide by heating in the presence of oxygen, along with the heavy metals contained in the waste. Materials forming iron oxide by heating include iron (Fe), an iron compound such as iron sulfide, and an iron salt such as iron sulfate, for example. On the other hand, the heavy metals which are contained in the waste are at least partially present as oxides. In particular, the quantity of heavy metal oxides contained in burned ash is remarkable. In a process of forming ferrite from such heavy metal oxides, it is conceivable that the oxides must pass through the following deoxidation steps. A large quantity of energy is required for these deoxidation reaction steps, and hence the temperature required for the reaction is also increased.

### (Deoxidation I)

2MO → 2M + O₂

MO₂ → M + O₂

2M₂O₃ → 4M + 3O₂

(M: heavy metal such as Pb, Cr or Cd)

The method according to the present invention remarkably differs from the conventional method in a point that the reductant is employed for ferrite formation in addition to iron oxide. For example, the reductant can be selected from the group consisting of carbon, carbon monoxide and hydrogen. Carbon, which is easy to handle, is a more preferable reductant. When carbon is employed as the reductant, for example, the following series of reactions can be caused:

### (Deoxidation II)

2C + O₂ → 2CO

MO + CO → M + CO₂

MO₂ + 2CO → M + 2CO₂

M₂O₃ + 3CO → 2M + 3CO₂

The carbon first reacts with oxygen to form carbon monoxide, which is a stronger reductant. Then, the carbon monoxide reacts with the heavy metal oxides, so that the heavy metal oxides are subjected to reduction reactions, i.e., deoxidation reactions. The deoxidation II by such a reaction process progresses with a smaller quantity of energy than the aforementioned deoxidation I employing no reductant. As compared with the conventional method adding only an iron based material such as iron oxide to waste, therefore, thermal energy which is necessary for ferrite formation is reduced in the present invention employing the reductant in addition to the iron based material. As shown in the following examples, the temperature which is necessary for ferritization is lower than the conventional method in the present invention. Reduction of the energy which is necessary for the heat treatment leads to reduction of the cost for the disposal.

According to the present invention, further, ferrite having higher magnetic strength than the conventional one can be formed with the same amount of addition of iron oxide as shown in the following examples, and hence ferrite of sufficient magnetic strength can be formed by employing iron oxide in a smaller amount than the prior art. This also results from employment of the reductant such as carbon.

According to the present invention, in addition, it is possible to suppress conversion of trivalent chromium to hexavalent chromium which is easily eluted in water, during the ferrite formation step, by the reductant.

In the method according to the present invention, the mixture for forming ferrite can contain 1 to 200 parts by weight, preferably 1 to 50 parts by weight of the iron based material and 1 to 50 parts by weight, preferably 1 to 25 parts by weight of the reductant, for example, with respect to 100 parts by weight of waste. However, these contents are not restricted, but must be properly varied with the type and the composition of the waste. Proper quantities of the iron based material and the reductant can be added to the waste at need.

A material which is mainly composed of iron such as iron manufacture slug, iron scrap or iron powder can be employed as the iron based material, in addition to iron oxide such as FeO, Fe₂O₃ or Fe₃O₄. The material which is mainly composed of iron can provide iron oxide by oxidation in the atmosphere, for example. Industrial waste such as iron manufacture slug or iron scrap is low-priced, and preferable in a point of suppressing the disposing cost. Further, an iron compound such as FeS, and an iron salt such as FeSO₄ can also be employed as the iron based material.

Carbon, carbon monoxide or hydrogen can be employed as the reductant. The carbon is a more preferable reductant, since the same is easy to handle, low-priced, and easy to obtain.

According to the present invention, the waste, the iron based material and the reductant can be heat treated at a temperature of 400°C to 1000°C, preferably 500°C to 800°C, for ferrite formation. In the conventional method adding no reductant, it has been difficult to obtain ferrite having sufficient magnetic strength at a temperature lower than 800°C. According to the present invention, on the other hand, ferrite of higher magnetic strength can be obtained by a heat treatment of 500°C to 800°C. Due to the addition of the reductant, the ferritization apparatus can be driven at a lower temperature, and the energy which is necessary for the disposal is saved as compared with the prior art. The time which is necessary for the heat treatment is 1 to 60 minutes, preferably 5 to 30 minutes, for example.

The heat treatment can be carried out in a fluid type burning furnace or a rotary burning furnace, for example. The waste disposing apparatus can comprise a waste receiving hopper, an iron based raw material supply unit, a reductant supply unit, a heating furnace, and a stirring unit at need, for example. In the burning, the mixture is preferably stirred so that the waste and the added materials are sufficiently in contact with each other. While the heat treatment can be carried out in every one of oxidizing, reducing and inert atmospheres, the same is more preferably carried out in the reducing atmosphere. The reducing atmosphere can be provided by the added reductant. When the heating furnace is closed or ventilation of air entering the heating furnace is limited, the oxygen content of the atmosphere in the heating furnace is reduced as compared with that in the atmosphere, due to the heat treatment of the mixture which is supplied into the heating furnace. Thus, it is also more preferable to carry out the heat treatment in an atmosphere whose oxygen content is reduced as compared with the atmosphere such as a decompressed atmosphere, for example. Under such an atmosphere whose oxygen content is reduced, a reducing atmosphere is provided by the reductant. When an iron material other than iron oxide is employed, on the other hand, it is preferable to heat the mixture under an atmosphere sufficiently containing oxygen. In an oxidizing atmosphere containing a large quantity of oxygen, however, the reductant may be uneconomically consumed in a large quantity.

Description is now made on disposal of specific waste in order to illustrate the present invention in more detail, while the present invention is not particularly restricted to such disposal.

### [Disposal of Burned Ash]

A method of disposing burned ash according to the present invention comprises a step of adding and mixing an iron based material and a reductant to and with burned ash, and a step of heat treating the obtained mixture to produce ferrite. According to this method, the iron based material such as iron oxide can be added by 1 to 50 parts by weight, preferably 5 to 40 parts by weight, more preferably 10 to 30 parts by weight, for example, with respect to 100 parts by weight of the burned ash. Iron oxide such as FeO, Fe₂O₃ or Fe₃O₄, iron manufacture slug, iron scrap or iron powder can be employed as the iron based material. A material which is mainly composed of iron such as the iron slug, the iron scrap or the iron powder can provide iron oxide by oxidation in the atmosphere, for example. Industrial waste such as the iron slug or the iron scrap is low-priced, and preferable in a point of suppressing the disposing cost. The iron based material is more preferably formed by fine particles, since the same is desirably in closer contact with the burned ash. Carbon, carbon monoxide or hydrogen can be employed as the reductant, for example. For example, the carbon can be added by 1 to 25 parts by weight, preferably 2 to 25 parts by weight, for example, with respect to 100 parts by weight of the burned ash. When about 25 parts by weight of carbon is added with respect to 100 parts by weight of burned ash, the effect substantially reaches saturation. Considering economy of the disposal, therefore, the amount of addition is preferably not more than 25 parts by weight. As a carbon source, charcoal which is obtained by carbonizing waste such as waste of timber, thinnings, drift timber, a residue of an agricultural product, a residue of food or a residue of a plant can be preferably employed, in addition to the carbon itself. Further, a material which is readily convertible to charcoal by a heat treatment or the like can also be employed as the carbon source. A carbonization material of industrial waste can be obtained at a low cost, and is preferable in a point of suppressing the disposing cost. Such carbon sources are preferably formed by fine particles or finely crushed, since the same are preferably in closer contact with the burned ash. The carbon reduces the heat treatment temperature which is necessary for ferritization as hereinabove described, and enables stabilization of the heavy metals at lower energy. Further, the quantity of the iron oxide which is necessary for ferritization can be reduced by addition of the carbon. While the burned ash may contain charcoal as an incompletely burned material, the effect of the present invention cannot be sufficiently attained by this charcoal alone. Addition of a proper quantity of carbon is desired, in order to enable ferritization at a lower temperature.

The burned ash which is disposed by the present invention includes bottom ash which is recovered from the bottom portion of an incinerator in a waste incineration plant and fly ash which is collected by an electric dust collector or the like. In particular, the present invention is suitable for disposal of fly ash, which is ought to be converted to a harmless state and to be stabilized in Japan under a law related to waste disposal and cleaning.

The mixture of the burned ash, the iron based material and the reductant such as carbon is heat treated at a temperature of 400°C to 1000°C, preferably 500°C to 800°C, for ferrite formation. In the conventional method adding no reductant, it has been difficult to obtain ferrite having sufficient magnetic strength at a temperature lower than 800°C. According to the present invention, on the other hand, ferrite of higher magnetic strength can be obtained by a heat treatment of 500°C to 800°C. Due to the addition of the reductant, the ferritization apparatus can be driven at a lower temperature, whereby the energy which is necessary for the disposal is saved as compared with the prior art. The time which is necessary for the heat treatment is 1 to 60 minutes, preferably 5 to 30 minutes, for example.

The heat treatment can be carried out in a fluid type burning furnace or a rotary burning furnace, for example. An apparatus for converting burned ash to a harmless state can comprise a burned ash receiving hopper, an iron based raw material supply unit, a reductant supply unit and a heating furnace, and a stirring unit at need, for example. In the burning, the mixture is preferably stirred so that the burned ash and the added materials are sufficiently in contact with each other. While the heat treatment can be carried out in every one of oxidizing, reducing and inert atmospheres, the same is more preferably carried out in the reducing atmosphere. The reducing atmosphere can be provided by the added reductant. When the heating furnace is closed or ventilation to the heating furnace is limited, the oxygen content of the atmosphere in the heating furnace is reduced as compared with that in the atmosphere, due to the heat treatment of the mixture. Thus, it is also more preferable to carry out the heat treatment in an atmosphere whose oxygen content is reduced as compared with the atmosphere such as a decompressed atmosphere, for example. Under such an atmosphere whose oxygen content is reduced as compared with the atmosphere, a reducing atmosphere is provided by the reductant. When an iron based material other than iron oxide is employed, on the other hand, an atmosphere containing oxygen is employed for formation of iron oxide. In an oxidizing atmosphere containing a large quantity of oxygen, however, the reductant may be uneconomically consumed in a large quantity.

### [Disposal of Soil Containing Heavy Metals]

The present invention can be applied to decontaminate soil which is contaminated with heavy metals such as Pb, Cd, Hg, Cu, Ni, Zn, Mn and Cr, in particular. A soil disposing method according to the present invention comprises a step of heat treating soil which is contaminated with heavy metals with an iron based material and a reductant to form ferrite. Due to this step, insolubilization is performed as to the heavy metals, to form soil which liberates no metals harmful to the environment. Further, harmful organic compounds which are contained in the soil can be decomposed by the heat treatment. While the soil can be subjected to the inventive process as such, it is better to introduce a crushing step or a drying step as a pretreatment when the soil is coagulated or in a muddy state, for example. When stones or wood chips are mixed into the soil, further, the same are preferably sieved in a pretreatment.

The iron material such as iron oxide which is mixed into the soil can be added by 1 to 50 parts by weight, preferably 5 to 40 parts by weight, more preferably 10 to 30 parts by weight, for example, with respect to 100 parts by weight of the soil. Iron oxide, iron manufacture slug, iron scrap or iron powder can be preferably employed as the iron based raw material. A material which is mainly composed of iron can provide iron oxide by oxidation in the atmosphere, for example. Further, soil containing a large quantity of iron or iron oxide can also be employed as the iron based material. Carbon, hydrogen or carbon monoxide can be employed as the reductant. In particular, the carbon is a low-priced safe material, and a preferable reductant. When carbon is employed as the reductant, for example, the same can be added by 1 to 50 parts by weight, preferably 5 to 25 parts by weight, for example, with respect to 100 parts by weight of the soil. As a carbon source, charcoal which is obtained by carbonizing waste such as waste of timber, thinnings, drift timber, a residue of an agricultural product, a residue of food or a residue of a plant can be preferably employed. Further, a material which is readily convertible to charcoal by a heat treatment or the like can be employed as the carbon source. A carbide of industrial waste can be obtained at a low cost, and is preferable in a point of suppressing the disposing cost. The carbon source is more preferably finely crushed, since the same is desirably in closer contact with the soil. The carbon source is preferably homogeneously mixed into the soil with the iron based material. When a gas such as hydrogen or carbon monoxide is employed as the reductant, on the other hand, the gas may be mixed into an atmosphere in the heat treatment. The reductant reduces the heat treatment temperature which is necessary for ferrite formation, and enables disposal at lower energy. Due to the addition of the reductant, the quantity of the iron based material which is necessary for ferrite formation can be reduced.

The temperature for the heat treatment can be set at 400°C to 1000°C, preferably 400°C to 800°C. Due to the addition of the reductant, ferrite of higher magnetic strength can be brought into the soil by the heat treatment of 400°C to 800°C. Due to employment of the reductant such as carbon, further, the disposing apparatus can be driven at a lower temperature, whereby energy which is necessary for the disposal is saved as compared with the prior art. The time which is necessary for the disposal is 5 to 60 minutes, for example.

The heat treatment can be carried out in a fluid type burning furnace or a rotary burning furnace similarly to the burned ash, for example. In more concrete terms, the treatment can be continuously carried out in a system employing a rotary burning furnace (rotary kiln) of loosely rotating a transversely placed cylindrical burning furnace body, stirring/mixing a reaction mixture while transporting the same, and reacting the same. The soil disposing apparatus can comprise a soil receiving hopper, an iron based raw material supply unit, a heating furnace, a stirring unit and a reductant supply unit, for example. In the apparatus, necessary materials are supplied into the heating furnace from the respective supply units, so that the heat treatment is carried out while performing stirring. In the heat treatment, it is preferable to sufficiently carry out stirring of the mixture so that the soil and the added materials are sufficiently in contact with each other. While the heat treatment can be carried out under every one of oxidizing, reducing and inactive atmospheres, the same is more preferably carried out under the reducing atmosphere. When the heating furnace is closed or ventilation to the heating furnace is limited, the oxygen content in the heating furnace is reduced as compared with the atmosphere due to the heating of the mixture. Further, a reducing atmosphere is brought into the heating furnace by the reductant. When the aforementioned equipment is brought into an on-vehicle state, soil disposal can be properly carried out at a desired place.

When soil is disposed in accordance with the present invention, the soil can be reliably brought into a harmless state through simpler steps with a smaller number of steps. Further, it is also possible to decompose harmful organic compounds by the heat treatment. The dry process according to the present invention does not cause a problem of a waste water treatment or the like too much. Further, continuous disposal can be readily carried out according to the present invention. The equipment which is necessary for the present invention can also be formed by a simple one, whereby on-vehicle equipment can be readily assembled as the result.

### [Disposal of Used Tire Waste]

A used tire as industrial waste can be disposed through the following process, for example: The used tire is finely crushed, and wires which are contained in the wire are removed at need. The obtained crushed substance is dry-distilled in a thermal decomposer. In the dry distillation step, a gas, oil and tar are formed while a carbonaceous residue remains. This residue contains heavy metals such as Zn. The present invention is applied to disposal of this residue. The based iron material is added to the residue, similarly to the above. On the other hand, the residue contains a considerable quantity of carbon for serving as a reductant. Therefore, it may not be necessary to add a reductant, or a deficit may be simply supplied at need. A mixture containing the residue containing the heavy metals, the iron based material and the reductant is heat treated as described above, to form ferrite.

### [Disposal of Plating Sludge]

Plating sludge containing heavy metals includes zinc plating sludge, chromium plating sludge, copper plating sludge and the like. Difference between the plating sludge and the aforementioned other waste resides in that most part of the plating sludge is occupied by specific heavy metals. Therefore, the quantities of employment of the iron based material and the reductant may be larger than those in the aforementioned waste. The plating sludge is dried at need, since the same considerably contains water. The iron based material and the reductant are mixed into the dried plating sludge, and a heat treatment is performed similarly to the above, to form ferrite.

### [Disposal of Dry Cell Waste]

Heavy metals which are contained in dry cells such as alkali cells, manganese cells and Ni-Cd cells can also be factors of environmental pollution. In a dry cell, heavy metals are contained in an electrode, an active material and an electrolyte. A powdery substance which is obtained by decomposing the dry cell and crushing its contents can be disposed in accordance with the present invention. The iron based material and the reductant such as carbon are added to the powdery substance containing the heavy metals. The obtained mixture is heat treated similarly to the above, to form ferrite.

According to the present invention, it is possible to form ferrite having different quality by changing reaction conditions. For example, it is possible to obtain a ferrite material having strong magnetism by adding larger quantities of iron oxide and charcoal to waste. According to the present invention, it will be possible to properly prepare a ferrite material which belongs to hard ferrite or soft ferrite, for example. The hard ferrite is a ferrite magnet having coercive force of at least 300 oersteds and saturation magnetization of at least 70 emu/g, which can be employed as a raw material for a magnetic storage material. The soft ferrite is a ferrite magnet having coercive force of about 1 oersted and saturation magnetization of about 70 emu/g, which can be employed as a raw material for a magnetic head, a wave absorbing tile or the like.

A ferrite material which is prepared in the present invention can be molded into a block or a tile by sintering, to be applicable to various uses. There is a wave absorber as a use for effectuating the magnetism of the ferrite. It is possible to prevent radio interference by a building, by employing ferrite tiles for external walls of the building or forming the external walls of the building by concrete which is mixed with ferrite. Further, it is possible to apply the ferrite to a magnetic induction tile. When a magnetic induction path is formed by this tile, automatic guiding by magnetic detection, induction of handicapped people etc. are enabled. On the other hand, such magnetic induction can also be applied to a cart for a golf course. Further, the ferrite can be employed as a snow melting material. It is possible to increase the temperature of the ground for melting snow by applying ferrite tiles to the ground. In addition, the ferrite can also be employed as a general-purpose magnet. The ferrite which is prepared in the present invention is relatively lightweight and low-priced. The present invention implements effective recycling of waste.

Concrete examples of the disposing apparatus according to the present invention are now described.

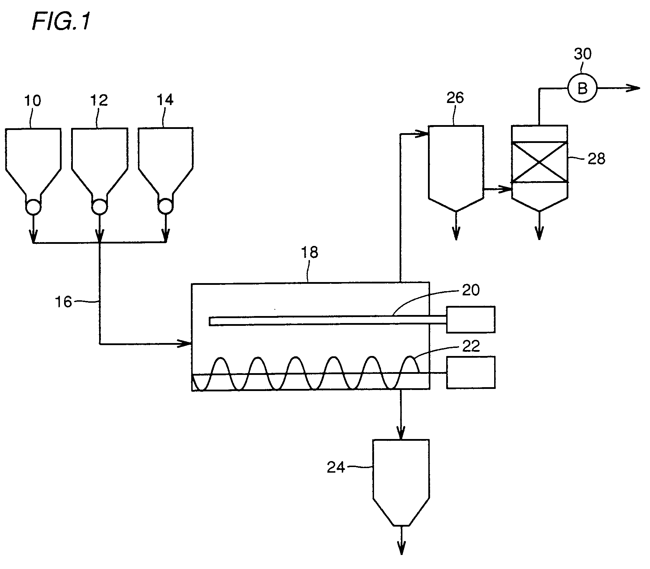

Fig. 1 shows an outline of the system of the disposing apparatus. An important process according to the present invention is carried out in a reactor (reaction furnace) 18. An inner wall of the reactor 18 is made of a refractory material which can withstand a heat treatment temperature. A stir-feed unit 22 is provided on a bottom portion of the reactor 18. Thus, a reaction mixture is stirred, and gradually fed to a prescribed place. A radiation heater 20 is provided in an upper portion of the reactor 18. The heater 20 heats the reaction mixture by radiation. The reactor 18 is supplied with necessary materials from a disposed substance supply machine 10, a reductant supply machine 12 and an iron based raw material supply machine 14 respectively through a raw material supply line 16. The respective raw materials may be supplied in a mixed state, or mixed in the reactor 18. Ferrite which is formed in the reactor 18 is recovered from a prescribed place through a ferrite material recovery unit 24. On the other hand, the reactor 18 is connected to a volatile metal recovery unit 26 at need. Metals having low melting points such as mercury are vaporized in the reactor 18, while such metal vapor is recovered through the unit 26. The unit 26 is connected to a dust collector 28 at need. The atmosphere in the reactor 18 is sucked by a blower 30 through the dust collector 28 and the unit 26. The dust collector 28 collects dust from the sucked gas. When waste containing volatile metals such as Hg is disposed, the reactor preferably has an exhaust port, and comprises a unit for recovering vaporized metals which are discharged from the exhaust port. It preferably further comprises a unit for collecting dust which is discharged from the exhaust part. When waste containing no volatile metals is disposed, on the other hand, it is not necessary to provide an exhaust port of the reactor, a volatile metal recovery unit and a dust collector. In the apparatus according to the present invention, means for mixing and stirring can be formed by a rotary vane stirrer which is provided in the reactor. On the other hand, it is also possible to stir the materials by rotating the reactor, as described later.

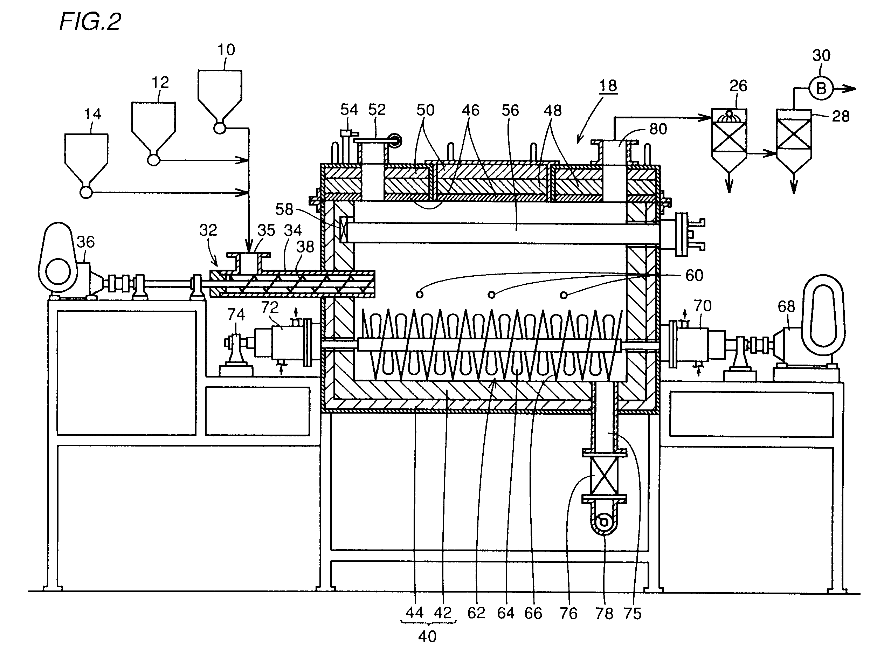

A more detailed concrete example is now shown in the apparatus shown in Fig. 1. Fig. 2 illustrates a more detailed structure of the reactor 18 shown in Fig. 1. An inner wall 40 including side walls and a floor in the reactor 18 is in a two-layer structure. The inner wall 40 consists of an outer adiabatic wall 42 which comes directly into contact with the reaction mixture, and an inner adiabatic wall 44 supporting the same. The material for the outer adiabatic wall 42 is a castable refractory. The castable refractory is prepared by adding a binder to a refractory aggregate and mixing the same. Alumina cement or the like is employed as the binder. The inner adiabatic wall 44 is formed by a board consisting of an alumina-silica refractory material such as a sillimanite board, for example. These materials can be replaced by other refractory materials at need. The ceiling of the reactor 18 is made of a three-layer heat resistant material. A portion which comes directly in contact with the atmosphere of the reactor consists of a refractory board 46, while refractory felt 48 and mineral wool 50 are successively provided inside the same.

An explosion-proof valve 52 and a pressure sensor 54 are provided on an upper part of the reactor 18. The explosion-proof valve 52 interlocks with the pressure sensor 54, to open when the interior of the reactor 18 is in excess of a prescribed pressure. Three thermocouples 60 for measuring the temperature of the reactor are provided in a central portion of the reactor 18. A stir-feed rod 62 is provided on a bottom portion of the reactor 18. An end of the rod 62 is supported by a bearing 74, while the other end is coupled to a motor reduction gear 68. Coolers 72 and 70 are provided so that heat of the stir-feed rod 62 which is heated in the reactor 18 is not transmitted to the bearing 74 and the motor reduction gear 68 respectively. The stir-feed rod 62 has a vane 64 and a screw 66. The vane 64 is adapted to stir the reaction mixture, while a principal object of the screw 66 is to feed the reaction mixture in a prescribed direction. The stir-feed rod 62 can be made of stainless. For the purpose of corrosion prevention, ceramics is preferably sprayed to a portion of the stir-feed rod 62 in the reactor. The screw may be rotatable in two directions of normal rotation and reverse rotation, or may be rotated in one direction of normal rotation. When reaction is made in a batch system, the screw is preferably bidirectionally rotatable. When ferrite is formed in a continuous system, the rotation may be in a single direction.

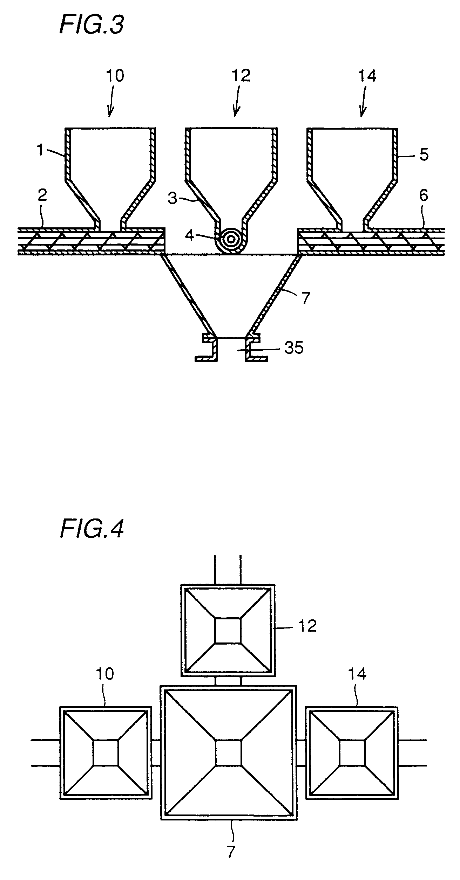

The reactor 18 is provided with a feeder 32 for supplying raw materials. The feeder 32 comprises a cylinder 34 for receiving the raw materials therein, a screw 38 for feeding the raw materials, and a motor reduction gear 36 for rotating the screw. Figs. 3 and 4 show a unit for supplying the raw materials to the feeder 32. Fig. 3 is a sectional view, and Fig. 4 is a plan view of Fig. 3 as viewed from above. A hopper 7 is mounted on a raw material inlet port 35 of the feeder. The raw materials are introduced into the hopper 7 from a disposed substance supply vessel 1, an iron based material supply vessel 3 and a reductant supply vessel 5 through screw feeders 2, 4 and 6 respectively. The quantities of the introduced raw materials are controlled by motor reduction gears (not shown) which are provided on the respective feeders. The raw materials of prescribed quantities are supplied from these supply units respectively in response to progress of the reaction. The raw materials are introduced into the reactor 18 through the feeder 32 shown in Fig. 2.

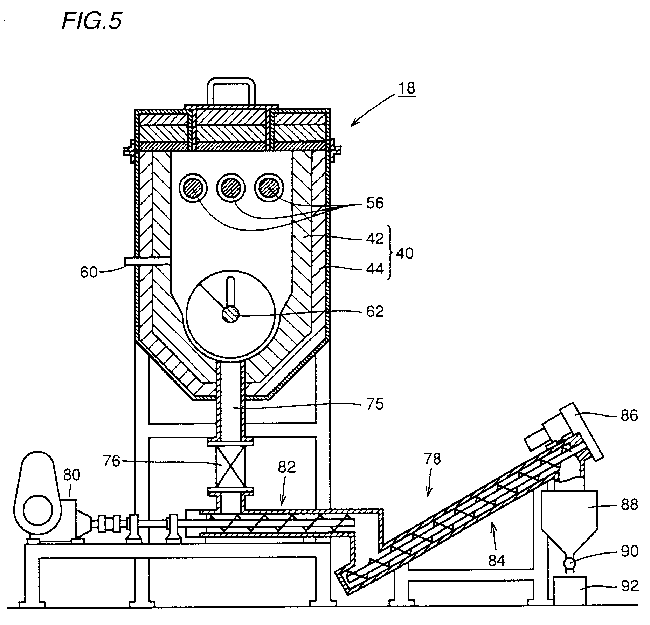

The introduced raw materials are stirred and mixed by the stir-feed rod 62. The mixture is heated by a radiant tube heater 56 which is provided in the reactor 18. The heater 56 is supported by the inner wall 40 of the reactor 18. Adiabator wool 58 is provided between an end of the heater 56 and the wall 42. The radiant tube heater 56 heats the mixture by radiation heat. The heat source for the heater 56 can be formed by an electric heater or a combustion flame. A tube covering such a heat source can be made of quartz or the like. The heated mixture is gradually moved by the screw 66 in the longitudinal direction of the screw. The material which is moved for a sufficient reaction time and forming ferrite is moved from an exhaust port 75 to a ferrite recovery unit 78. Fig. 5 shows a section of the reactor 18 shown in Fig. 2 as viewed from another angle and the ferrite recovery unit 78. Referring to Fig. 5, the material containing ferrite passing through the exhaust port 75 is supplied to a feeder 82 through a gate valve 76. The material is moved by the feeder 82, and further moved to a reservoir 88 by a feeder 84. The feeders 82 and 84 are driven by motor reduction gears 80 and 86 respectively. These feeders, which are adapted to move the material containing ferrite to a convenient place, can be omitted. The ferrite material which is collected in the reservoir 88 can be transferred to a recovery vessel 92 through a switching valve 90. Such feeders and reservoir are particularly useful when the ferrite material is continuously produced by continuously making the reaction. When the ferrite material is produced in a batch system, on the other hand, such feeders and reservoir may be omitted. The ferrite which is produced in the reactor 18 may be directly stored in the recovery vessel from the exhaust port 75.

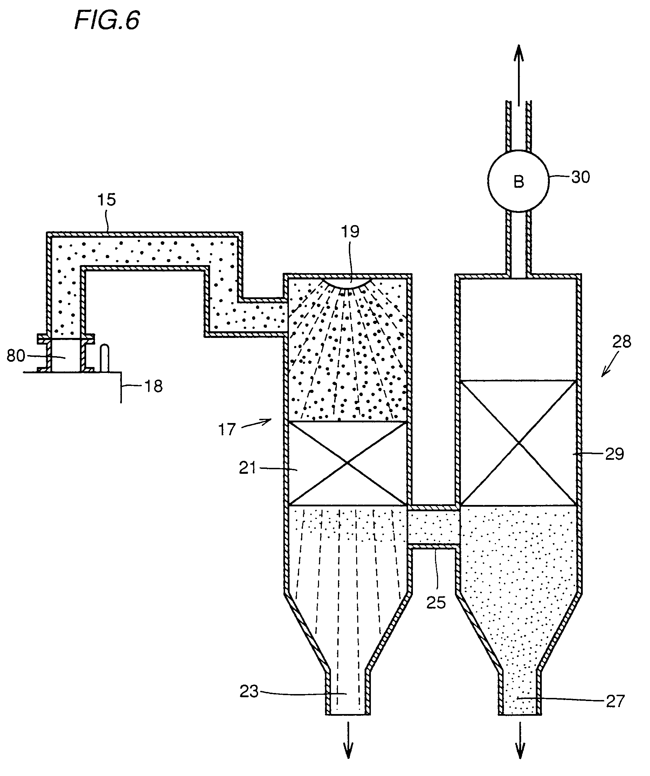

An exhaust port 80 is formed in the ceiling portion of the reactor 18. This is adapted to recover vapor of the metals generated during the reaction, particularly volatile metals such as toxic mercury etc. Fig. 6 shows a unit for recovering vaporized metals and dust. An exhaust pipe 15 is connected to the exhaust port 80 of the reactor 18, and the exhaust pipe 15 is connected to a cooler 17 serving as a volatile metal recovery unit. A shower nozzle 19 is provided on an upper portion of the cooler 17, so that gas containing volatile metals from the exhaust pipe 15 is exposed to a water shower. The shower and the gas are filtered by a filter 21. The volatile metals which are cooled by the shower and transferred into water are recovered from an exhaust port 23. The filter 21 collects coarse dust contained in the gas. The gas which is filtered by the filter 21 is fed to the dust collector 28 through an exhaust pipe 25. The gas is sucked by a blower 30 through a dust collecting filter 29. Thus, clean air is discharged from the blower 30. On the other hand, the dust which is collected by the dust collecting filter 29 can be recovered from an exhaust port 27. Due to such a recovery unit, the atmosphere in the reactor 18 is loosely sucked by the blower 30. On the other hand, ventilation into the reactor 18 is limited, and other portions except for the raw material inlet port 35, the exhaust port 75 and the exhaust port 80 are substantially in closed structures. Therefore, substantially all volatile metals are recovered from the exhaust port 80, while supply of air, i.e., supply of oxygen into the reactor 18 is limited.

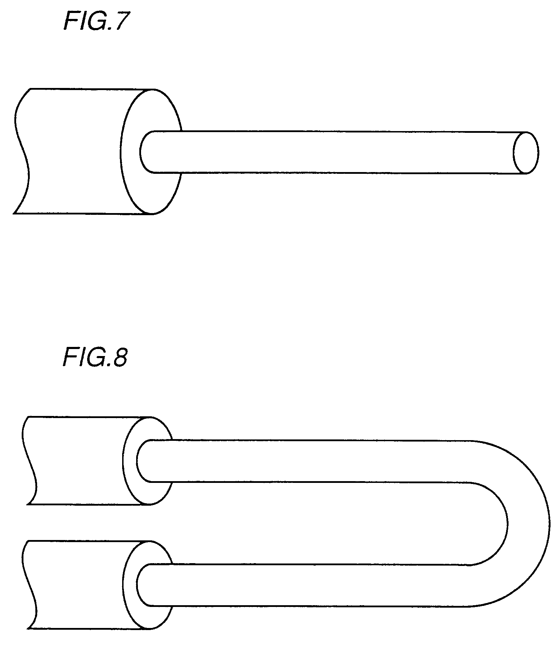

In the apparatus shown in Fig. 2, three radiant tube heaters were employed for the heating means as shown in Fig. 5. Each tube heater which is herein employed has a cylindrical tube as shown in Fig. 7. However, the shape of the heater is not restricted to this, but a heater having a U-shaped pipe shown in Fig. 8 can also be employed, for example. Heating wires or combustion flames can be employed as the heat source for the radiant tube heaters. Those employing combustion flames are called radiant burner heaters, for example. These radiation heaters will not change the atmosphere in the furnace by the heat sources. Therefore, a desired atmosphere can be retained during the reaction. Also in the point of energy efficiency, heating by radiation is more preferable. When a necessary number of radiation heaters are provided in prescribed positions, the material can be homogeneously heated. From the aforementioned points, the radiation heaters are more preferable heating means. While the apparatus shown in Figs. 2 and 5 employs three heaters, heaters of various shapes can be provided in an arbitrary number in response to the shape and the size of the reactor.

While the feeders are employed as means for supplying or carrying the materials in the aforementioned apparatus, the present invention is not restricted to this. For example, conveyors and other ordinary means can be employed for supplying or carrying the materials. Further, the volatile metal recovery unit and the dust collector may be omitted when waste containing no harmful volatile metals is disposed. Further concrete examples of the apparatus according to the present invention are now described.

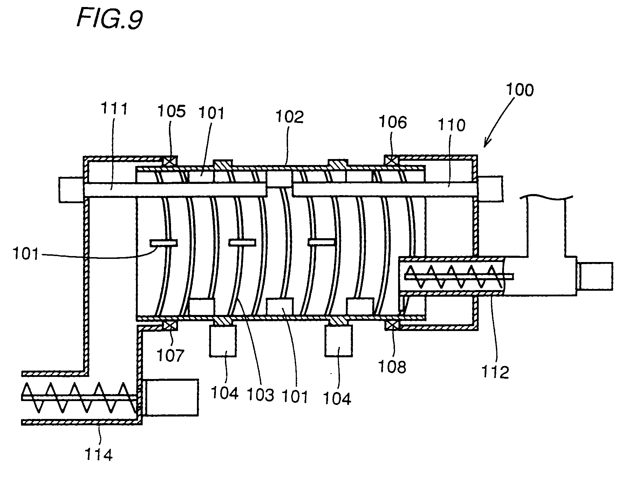

Fig. 9 shows another concrete example of the inventive apparatus. The apparatus shown in Fig. 9 has a rotary reactor (rotary furnace). In the reactor 100, a rotary cylinder 102 is provided on a central portion. Portions between the rotary cylinder 102 and an outer wall of the reactor 100 are sealed with sealing members 105, 106, 107 and 108. Stirring plates 101 and a spiral blade 103 are formed on an inner wall of the cylinder 102. The plates 101 are adapted to stir a reaction mixture, while the blade 103 is adapted to gradually feed the reaction mixture in a prescribed direction along rotation of the cylinder 102. The cylindrical cylinder 102 is rotated by a roller 104. Raw materials are supplied into the rotary cylinder 102 from a feeder 112. Radiant tube heaters 110 and 111 are provided in the reactor 100, so that the raw materials which are supplied into the cylinder 102 are heated by these. The materials forming ferrite along rotation of the rotary cylinder 102 are fed to an end of the reactor 100, and recovered from a feeder 114. In such an apparatus, the aforementioned explosion-proof valve, volatile metal recovery unit, dust collector and the like can be mounted on prescribed portions at need. While the radiant tube heaters are employed as heating means in the apparatus shown in this figure, a system of directly heating the rotary cylinder itself by a combustion flame may alternatively be employed.

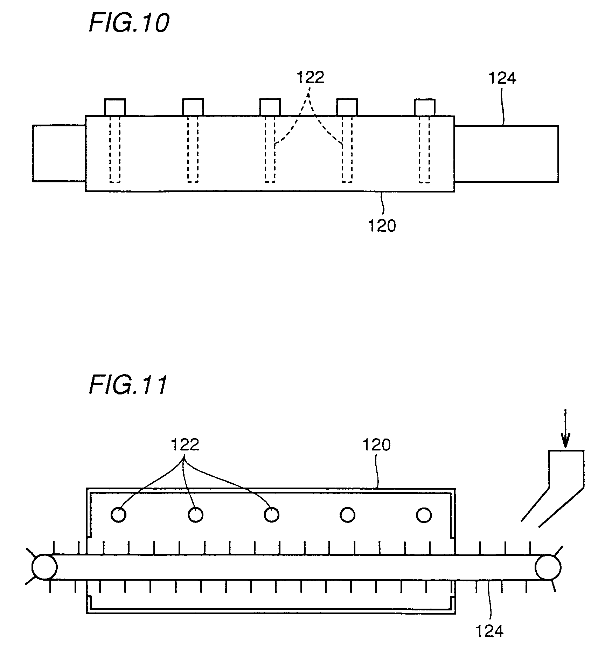

Figs. 10 and 11 show a concrete example of a further apparatus according to the present invention. This apparatus is adapted to carry raw materials from an end to another end of a reactor by a conveyor, to form ferrite from the raw materials during this. A plurality of radiant tube heaters 122 are provided in a reaction chamber 120. Raw materials are placed on a conveyor 124, and moved from an end to another end of the reaction chamber 120. Reaction progresses by heating during this movement, to form a ferrite material. The ferrite material is recovered from the other end of the reaction chamber 120. In this apparatus, a chain to which ceramic is sprayed can be employed for the conveyor. Further, the aforementioned volatile metal recovery unit and dust collector may be provided on prescribed places at need.

In the aforementioned apparatuses, various waste materials such as burned ash, plating sludge, soil, tire waste and dry cell waste can be disposed. In the aforementioned apparatuses, useful ferrite materials can be produced by supplying waste, iron based materials and reductants into the reactors and advancing reaction under the aforementioned conditions. These apparatuses can be used as apparatuses for disposing large quantities of waste as stationary type ones. On the other hand, the structures of these apparatuses are relatively simple, and miniature apparatuses can be readily prepared. When a miniature apparatus is carried on a vehicle, waste can be disposed in an arbitrary place.

Examples verifying effectiveness of the process according to the present invention are now described.

### Examples

### Example 1

Prescribed quantities of iron oxide and charcoal were added to fly ash which is refuse incineration ash, and sufficiently mixed in a mortar. The iron oxide was a commercially available reagent consisting of Fe₂O₃ in purity of at least 98 %. The charcoal was obtained by carbonizing husks of coffee beans. The mixture was introduced into a lidded porcelaneous crucible, lidded and heat treated in an electric furnace at a prescribed temperature in the range of 400°C to 1000°C for 10 minutes. Then, the mixture was taken out from the furnace and cooled by standing, and thereafter a magnetism test and a released metal content test were made on the heated/fired substance. On the other hand, a mixture of only fly ash and iron oxide with no addition of charcoal was similarly heat treated in an electric furnace as comparison, and a magnetism test and a released metal content test were carried out.

In the magnetism test, bar magnets were approached onto the fired substances, to measure the weights of adhering fired substances and compare the same. The released metal content test was carried out along a method of detecting metals etc. contained in industrial waste (Notification No. 13 of the Japanese Environmental Agency·No. 44 revised on July 3, 1992). Namely, each sample (unit: gram) and a solvent (that prepared by adding hydrochloric acid to pure water so that the hydrogen ion exponent (pH) was at least 5.8 and not more than 6.3) (unit: milliliter) were mixed with each other at a rate of a weight/volume ratio of 10 %, so that the mixed solution was in excess of 500 milliliters. The obtained mixed solution was shaken at the room temperature (about 20°C) under a normal pressure (about 1 atom) through a shaker for 6 hours, to make extraction of the sample by the solvent. In the shaking, the shaking width was adjusted to at least 4 centimeters and not more than 5 centimeters, and the shaking was carried out by about 200 times per minute. After the shaking, the quantities of heavy metals transferred from the sample to the solvent were measured.

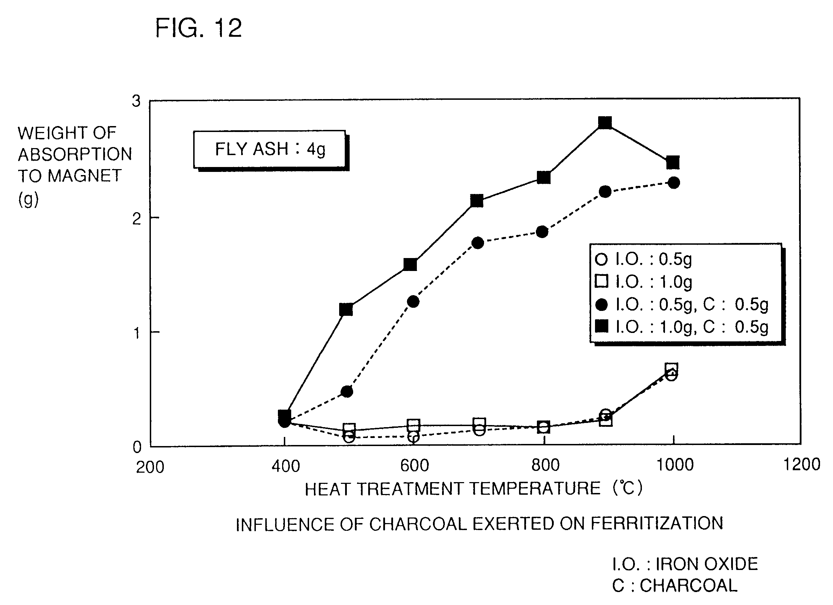

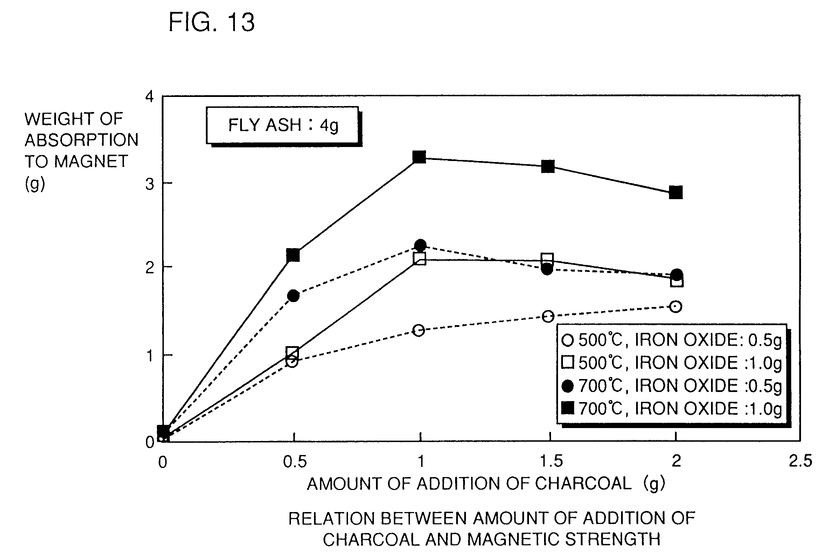

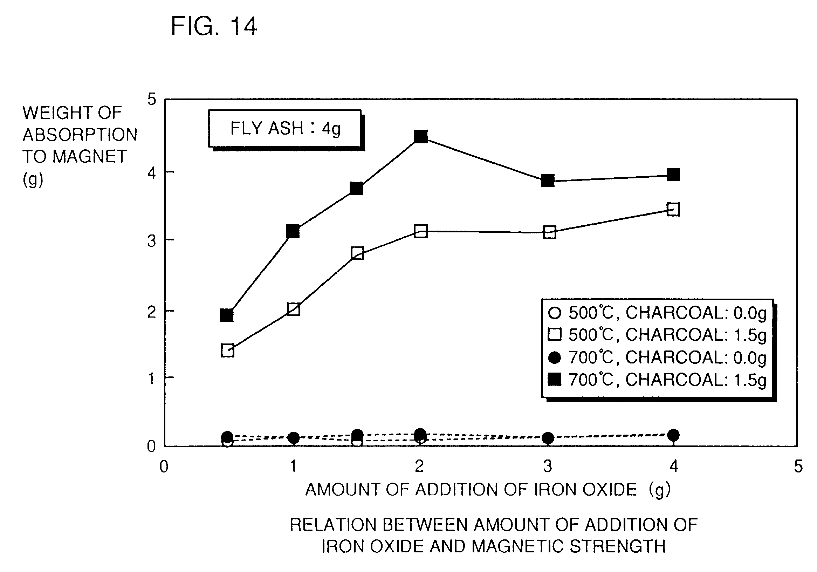

Fig. 12 shows the results of the magnetism test as to materials obtained by heat treating mixtures each prepared by adding 0.5 g or 1.0 g of iron oxide and 0.5 g of charcoal with respect to 4 g of fly ash. Fig. 12 also shows the results as to materials to which no charcoal was added. Referring to Fig. 12, the axis of abscissas shows heat treatment temperatures, and the axis of ordinates shows weights (g) of absorption to the magnets as to the samples obtained as the results of the heat treatments. As shown in the figure, no materials having strong magnetism were obtained in the heat treatments of 400°C to 800°C in the samples to which no charcoal was added. On the other hand, magnetic strength of at least 10 times was obtained by adding 0.5 g of charcoal, as compared with that of 700°C with no addition, for example. Further, it was possible to form ferrite having strong magnetism at a lower temperature by adding charcoal. For example, magnetic strength at a time of making a heat treatment at 500°C for 10 minutes with addition of charcoal is higher than that at a time of making a heat treatment at 700°C for 10 minutes with no addition of charcoal. Further, it was possible to obtain ferrite having strong magnetism with a small quantity of iron oxide by adding charcoal. Fig. 13 shows magnetism of samples each obtained by changing the amount of addition of charcoal with respect to 4 g of fly ash and 0.5 g or 1 g of iron oxide and heat treating the mixture at 500°C or 700°C. The magnetic strength was increased up to an amount of addition of charcoal of about 1 g, and the highest magnetic strength was attained by addition of 1.0 g (25 weight % of the fly ash) of charcoal. On the other hand, it was impossible to further remarkably obtain high magnetic strength by addition of more than 1.0 g. Fig. 14 shows magnetism of samples each prepared by changing the amount of addition of iron oxide with respect to 4 g of fly ash and 0 g or 1.5 g of charcoal and making a heat treatment at 500°C or 700°C.

The aforementioned released metal content test was made on four types of samples shown in Table 1. The quantities of eluted metals (Hg, Pb, Cd, Cr and Cu) were measured by an ICP spectrometer. ICP, which is an abbreviation of an inductively coupled high-frequency plasma (Inductively Coupled Plasma), is a method of generating the so-called discharge plasma, introducing a solution sample thereinto, exciting the same and detecting a spectral line, thereby analyzing the target element. Table 2 shows the results of the released metal content test. As obvious from Table, it was conceivable that the heavy metals were fixed in a crystal lattice of ferrite and stabilized in the sample (No. 4) which was obtained in accordance with the present invention. As obvious from comparison of No. 3 with No. 4, charcoal extremely effectively acted as to stabilization of Cr. This was conceivably because trivalent Cr was converted to hexavalent Cr which was easy to elute in water by the heat treatment in the sample to which no charcoal was added, while such conversion was suppressed and Cr was effectively stabilized by addition of charcoal.

**[Table 1]**

| Analyzed Samples | |
|---|---|
| Sample | Explanation of Sample |
| No. 1 | burned fly ash of dried (150°C, 2 hours) powder fuel |
| No. 2 | fly ash prepared by decarbonizing (1000°C, 2 hours) No. 1 |
| No. 3 | fly ash prepared by ferritizing (25% of iron oxide, 800°C, 10 minutes) No. 2 |
| No. 4 | fly ash prepared by ferritizing (25% of iron oxide, 25% of charcoal, 800°C, 10 minutes) No.2 |

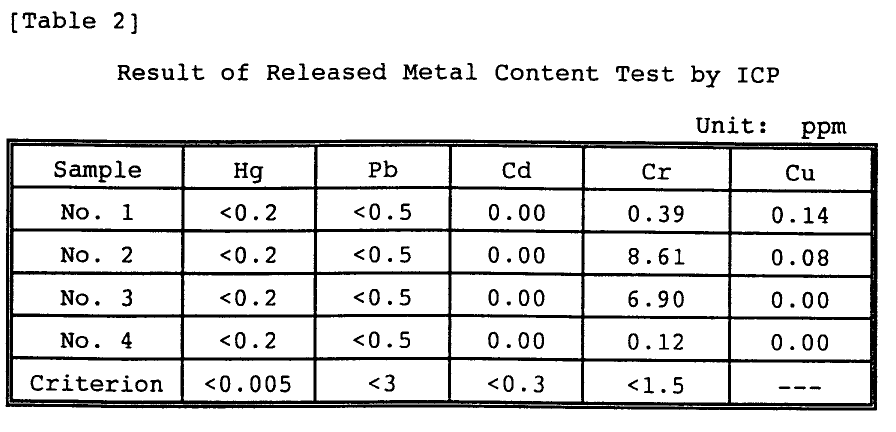

### Example 2

Heavy metal components shown in Table 3 were blended to ordinary soil containing no harmful heavy metals, to first prepare artificial soil. Powder of iron oxide and charcoal (powder) were added to and mixed with the prepared artificial soil, and thereafter the mixture was introduced into a porcelaneous crucible, lidded and heat treated at a prescribed temperature for a prescribed time. The aforementioned commercially available reagent and the aforementioned charcoal obtained by carbonizing husks of coffee beans were employed as the iron oxide and the charcoal respectively. Table 4 shows blending ratios of the artificial soil, the iron oxide and the charcoal which were mixed in respective samples, heat treatment temperatures and times. A magnetism test similar to that in Example 1 was made on the artificial soil samples which were cooled by standing after the heat treatments. Table 4 also shows weights of soil components adsorbed by magnets. It is understood that ferrite was formed by disposal according to the present invention. It is also understood that a larger quantity of ferrite can be formed at a low temperature by adding charcoal.

**[Table 3]**

| Composition of Artificial Soil | |
|---|---|
| Component | Blending Ratio (weight %) |
| Soil | 87.48 |
| CdO | 0.11 |
| PbO₂ | 2.24 |
| ZnO | 3.60 |
| CuO | 1.54 |
| Fe₂O₃ | 4.27 |
| MnO₂ | 0.35 |
| Ni₂O₃ | 0.17 |
| Cr₂O₃ | 0.24 |

**[Table 4]**

| Sample | Artificial Soil (g) | Iron Oxide (g) | Charcoal (g) | Heat Treatment Temperature (°C) | Heat Treatment Time (min.) | Weight of Absorption to Magnet (g) |
|---|---|---|---|---|---|---|
| No. 1 | 4.0 | - | - | - | - | 0.15 |
| No. 2 | 4.0 | 0.50 | 0.25 | 600 | 30 | 4.10 |
| No. 3 | 4.0 | 0.25 | 0.25 | 600 | 30 | 3.73 |
| No. 4 | 4.0 | 0.25 | 0.50 | 600 | 30 | 4.06 |
| No. 5 | 4.0 | 0.50 | 0.25 | 800 | 30 | 4.26 |
| No. 6 | 4.0 | 0.25 | 0.50 | 800 | 30 | 3.85 |
| No. 7 | 4.0 | 0.50 | 0.25 | 600 | 15 | 4.30 |
| No. 8 | 4.0 | 0.25 | 0.50 | 600 | 15 | 4.04 |

### Industrial Availability

As hereinabove described, the present invention is useful for disposal of waste containing heavy metals such as burned ash, plating sludge, used tire waste and dry cell waste and soil containing the heavy metals from such waste. The present invention can stabilize the heavy metals contained in the waste and convert the same to a harmless material, as well as prepare a useful ferrite material. The present invention provides simpler and effective method of and apparatus for disposing waste containing heavy metals.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A method of disposing waste containing heavy metals for conversion to a harmless state,
comprising a step of forming ferrite by heating a mixture of said waste and an iron based material, being selected from the group consisting of iron oxide and materials forming iron oxide by heating in the presence of oxygen, in a dry method in the presence of a reductant.

2. The method in accordance with claim 1, wherein said reductant is selected from the group consisting of carbon, carbon monoxide and hydrogen.

3. The method in accordance with claim 1, wherein said reductant is carbon, said iron based material is iron oxide, and said ferrite is formed by heating a mixture containing said waste, carbon and iron oxide in a dry method.

4. The method in accordance with claim 3, wherein said mixture contains 100 parts by weight of said waste, 1 to 50 parts by weight of iron oxide and 1 to 25 parts by weight of carbon.

5. The method in accordance with any one of claims 1 to 4, wherein said waste is burned ash.

6. The method in accordance with any one of claims 1 to 4, wherein said waste is soil containing heavy metals.

7. The method in accordance with any one of claims 1 to 4, wherein said waste is plating sludge.

8. The method in accordance with any one of claims 1 to 4, wherein said waste is derived from a dry cell.

9. The method in accordance with any one of claims 1 to 4, wherein said waste is derived from a used tire.

10. The method in accordance with any one of claims 1 to 9, wherein said heating is carried out at a temperature in the range of 500°C to 800°C.

11. The method in accordance with any one of claims 1 to 10, wherein said heating is carried out under a reducing atmosphere.

12. An apparatus for disposing waste containing heavy metals for conversion to a harmless state comprising:
a reaction furnace having an inner wall consisting of a refractory material;
means for supplying prescribed quantities of said waste, an iron based material and a reductant into said reaction furnace;
means for mixing and stirring said materials being supplied into said reaction furnace; and
means for heating said materials being supplied into said reaction furnace,
wherein said apparatus produces ferrite by stirring and heating supplied said materials in said reaction furnace.

13. The apparatus in accordance with claim 12, wherein said means for heating is a radiation heater being provided in said reaction furnace.

14. The apparatus in accordance with claim 13, wherein said radiation heater is a radiant tube heater.

15. The apparatus in accordance with any one of claims 12 to 14, wherein said reaction furnace further has an exhaust port, and said disposing apparatus further comprises a unit for recovering vaporized metals being discharged from said exhaust port.

16. The apparatus in accordance with any one of claims 12 to 15, wherein said reaction furnace further has an exhaust port, and said disposing apparatus further comprises a unit for collecting dust being discharged from said exhaust port.

17. The apparatus in accordance with any one of claims 12 to 16, wherein said means for mixing and stirring is a rotary vane stirrer being provided in said reaction furnace.

18. The apparatus in accordance with any one of claims 12 to 17, wherein said reaction furnace is of a rotary type.

## Amended claims

### Amended claims under Art. 19.1 PCT

1. (amended) A method of disposing waste containing heavy metals for conversion to a harmless state,
comprising a step of forming ferrite by heating at a temperature of 500°C to 700°C a mixture of said waste and an iron based material selected from the group consisting of iron oxide and materials forming iron oxide by heating in the presence of oxygen, in a dry method in the presence of a reductant selected from the group consisting of charcoal, carbon monoxide and hydrogen.

2. (canceled)

3. (amended) The method in accordance with claim 1, wherein said reductant is charcoal, said iron based material is iron oxide, and said ferrite is formed by heating at a temperature of 500°C to 700°C a mixture containing said waste, charcoal and iron oxide in a dry method.

4. (amended) The method in accordance with claim 3, wherein said mixture contains 100 parts by weight of said waste, 1 to 50 parts by weight of iron oxide and 1 to 25 parts by weight of charcoal.

5. The method in accordance with any one of claims 1 to 4, wherein said waste is burned ash.

6. The method in accordance with any one of claims 1 to 4, wherein said waste is soil containing heavy metals.

7. The method in accordance with any one of claims 1 to 4, wherein said waste is plating sludge.

8. The method in accordance with any one of claims 1 to 4, wherein said waste is derived from a dry cell.

9. The method in accordance with any one of claims 1 to 4, wherein said waste is derived from a used tire.

10. (canceled)

11. (canceled)

12. An apparatus for disposing waste containing heavy metals for conversion to a harmless state comprising:
a reaction furnace having an inner wall consisting of a refractory material;
means for supplying prescribed quantities of said waste, an iron based material and a reductant into said reaction furnace;
means for mixing and stirring said materials being supplied into said reaction furnace; and
means for heating said materials being supplied into said reaction furnace,
wherein said apparatus produces ferrite by stirring and heating supplied said materials in said reaction furnace.

13. The apparatus in accordance with claim 12, wherein said means for heating is a radiation heater being provided in said reaction furnace.

14. The apparatus in accordance with claim 13, wherein said radiation heater is a radiant tube heater.

15. The apparatus in accordance with any one of claims 12 to 14, wherein said reaction furnace further has an exhaust port, and said disposing apparatus further comprises a unit for recovering vaporized metals being discharged from said exhaust port.

16. The apparatus in accordance with any one of claims 12 to 15, wherein said reaction furnace further has an exhaust port, and said disposing apparatus further comprises a unit for collecting dust being discharged from said exhaust port.

17. The apparatus in accordance with any one of claims 12 to 16, wherein said means for mixing and stirring is a rotary vane stirrer being provided in said reaction furnace.

18. The apparatus in accordance with any one of claims 12 to 17, wherein said reaction furnace is of a rotary type.
